# EUROPÄISCHE PATENTSCHRIFT

(11) **EP 1 495 559 B1**
(45) Veröffentlichungstag und Bekanntmachung des Hinweises auf die Patenterteilung: **15.02.2006**
(21) Anmeldenummer: 03722250.2
(22) Anmeldetag: 01.04.2003
(51) Int. Cl.: H04B 10/08

(54) **VERFAHREN UND ANORDNUNG ZUR DETEKTION EINES KONTROLLSIGNALS IN EINEM OPTISCHEN ÜBERTRAGUNGSSYSTEM**
METHOD AND ARRANGEMENT FOR DETECTING A CHECK-BACK SIGNAL IN AN OPTICAL TRANSMISSION SYSTEM
PROCEDE ET ARRANGEMENT DE DETECTION D'UN SIGNAL DE COMMANDE DANS UN SYSTEME DE TRANSMISSION OPTIQUE

(30) Priorität: 12.04.2002 DE 10216279
(43) Veröffentlichungstag der Anmeldung: 12.01.2005
(73) Patentinhaber: SIEMENS AKTIENGESELLSCHAFT, 80333 München (DE)
(72) Erfinder: GENTNER, Guido, 81673 München (DE); NEUMANN, Rene, 82152 Planegg (DE); THANHÄUSER, Gerhard, 86415 Mering (DE)
(86) Internationale Anmeldenummer: PCT/DE2003/001075
(87) Internationale Veröffentlichungsnummer: WO 2003/088528

(56) Entgegenhaltungen:
- DE-A- 10 024 238
- DE-A- 10 046 104
- US-A1- 2001 033 406
- ROSSI G ET AL: "Optical performance monitoring in reconfigurable WDM optical networks using subcarrier multiplexing" JOURNAL OF LIGHTWAVE TECHNOLOGY, IEEE. NEW YORK, US, Bd. 18, Nr. 12, Dezember 2000 (2000-12), Seiten 1639-1648, XP002179167 ISSN: 0733-8724

## Beschreibung

Die Erfindung betrifft ein Verfahren zur Detektion eines Kontrollsignals in einem optischen Übertragungssystem nach dem Anspruch 1. Zwei Weiterbildungen der Erfindung werden als Verwendung des Verfahrens gemäß Anspruch 1 zur Ermittlung einer Leitungsunterbrechung nach dem Anspruch 7 und als Verwendung des Verfahrens gemäß Anspruch 1 zur Messung der Übertragungsdämpfung nach dem Anspruch 9 angegeben.
Zur Durchführung der jeweiligen Verfahren gemäß eines der Ansprüche 1, 7 oder 9 werden auch Anordnungen als Weiterbildungen der Erfindung nach den Ansprüchen 10, 11, 12 angegeben.

In optischen Übertragungssystemen müssen in vielen Fällen Leitungsunterbrechungen erkannt werden und zum Abschalten von Lasern bzw. optischen Verstärkungen führen, um Personengefährdungen zu vermeiden. Solche Maßnahmen sind unter der Bezeichnung "automatic laser shutdown (ALS)" Bestandteil internationaler Standards.

Aus DE 10046104 sind ein Verfahren und eine Vorrichtung zur Erkennung von Leitungsunterbrechungen in einem optischen WDM-System mit mindestens einem optischen Verstärker auf einer optischen Übertragungsstrecke , wobei mindestens einem der zu übertragenden optischen Signale ein Pilotton aufmoduliert ist, bekannt.
Die Verwendung von Verfahren mit Pilotton bleiben allerdings aufwendig. Außerdem können die Signale nachteilig beeinflusst werden, in dem sie eine spektrale Verbreiterung durch Modulation erfahren. Die Auswertung bei solchen Verfahren erfolgt auch erst nach vorhandener Verstärkung.

Aus WO 99/48229 ist ein Verfahren zur Ersatzschaltung bei optischen übertragungseinrichtungen bekannt, bei dem außer einem Working-Signal und einem Protection-Signal jeweils Kontroll-Signale mit Information über den Belegungszustand übertragen und empfangsseitig ausgewertet werden. Die Kontrollsignale werden über einen Überwachungskanal auch bei abgeschaltetem Nutzsignal übertragen. In Figur 6 dieser Veröffentlichung ist eine Anordnung für das Ein- oder Ausschalten einer Verstärkerstelle beschrieben, bei der ein Kontroll-signal als Überwachungskanal und ein Nutzsignal mit einem Demultiplexer in zwei Zweige getrennt sind. Im Zweig des Kontroll-Signals wird eine Pegelregenerierung mittels eines opto-elektrischen Wandlers, eines Regenerators und eine e-lektro-optischen Wandlers durchgeführt. Im Zweig des Nutzsignals ist ein Verstärker mit einem nachgeschalteten Pegelabschalter angeordnet, der bei fehlendem Nutzsignal das Ausgangssignal am Verstärker abschaltet. Hier ist das regenerierte Kontroll-Signal immer weiterhin mit geringem Pegel übertragen. Entscheidungslogikmodule sind auch vorgesehen, die die An- bzw.- Abwesenheit eines Nutzsignals überprüfen. In Verbindung mit einem Kontrollsignal wird die Übertragung auf eine nicht abgeschaltete Übertragungsstrecke umgeleitet und die Laser in der unterbrochenen Leitung ausgeschaltet.

Aus US 2001/0033406 A1 ist eine Methode zur Vermeidung eines Augenschaden bei optischer Ausschaltung einer Faser bekannt, bei der zusätzlich zu einem Datensignal ein Kontrollsignal in einem schmalbandigen Spektralbereich detektiert wird. Weist das Datensignal kleine Signal-Rauschabstände auf bzw. sind verwendete Pumpquelle ausgeschaltet, besteht die Gefahr, dass das Kontrollsignal durch Amplitudenbegrenzung in Rauschen unterdrückt wird. Vielmehr werden Komparatoren zum Vergleich der Leistungen zwischen Datensignal und Kontrollsignal verwendet, wobei die Leistungen des Kontrollsignals und des Datensignals möglichst gleich gewählt werden.

Aufgabe der Erfindung ist es, ein Verfahren und eine Vorrichtung anzugeben, die in einer unabhängigen Weise zu den Nutzsignalen eine Detektion eines Kontroll-Signals einfacher ermöglichen.
Da bei einer ausgeschalteten Pumpquelle in dem Übertragungssystem die optische Verstärkung entfällt, ist der Signal-Rauschabstand bei der Detektion des optisch überträgeneri Kontroll-Signals entsprechend reduziert. Aufgabe der Erfindung ist es daher auch bei reduziertem Signal-Rauschabstand eine sichere Erkennung des Kontroll-Signals zu gewährleisten.

Eine Lösung der Aufgabe erfolgt hinsichtlich ihres Verfahrensaspekts durch ein Verfahren mit den Merkmalen des Patentanspruchs 1 und hinsichtlich ihres Vorrichtungsaspekts durch eine Anordnung mit den Merkmalen des Patentanspruchs 9.

Als Kontrollsignal kann ein einfaches Signal eines Überwachungskanals für das Netzwerkmanagement verwendet werden. Von großem Vorteil ist die hohe Leistung des Kontrollsignals in einem möglichst schmalbandigen Spektralbereich durch die Konzentration eines konstanten Anteils seiner Leistung in einem festegelegten Frequenzbereich. Damit ist eine Detektion, das heißt lediglich die Erkennung des Vorhandenseins des Kontrollsignals auch dann noch möglich, wenn auf Grund eines zu hohen Rauschanteiles innerhalb der Bandbreite des Erkennungssignals eine Regeneration unmöglich ist.
Eine interessante Verwendung des Verfahrens ist die Methode zur Erkennung einer Leitungsunterbrechung, die voll unabhängig von den Nutzkanälen erfolgt. Dies bedeutet, dass auch eine oder mehrere Pumpquellen in dem Übertragungssystem ausgeschaltet bleiben können, solange das Kontrollsignal nicht detektiert wird. Jede Personengefährdung durch austretendes Laserlicht ist damit vorteilhaft ausgeschlossen.

Eine weitere Verwendung des Verfahrens ist eine Methode zur Messung der Übertragungsdämpfung bis zur Auskopplung des Kontrollsignals. Da die Leistung der isolierten schmalbandigen Spektrallinie zur Detektion des Kontrollsignals ermittelt wird, liefert das Verhältnis zwischen dieser ermittelten Leistung und der ursprünglichen konzentrierten festgelegten Anteil der Leistung die Dämpfung. Dabei muss auch eine mögliche Zwischenverstärkung des Kontrollsignals mit dem entsprechenden Wert der Verstärkung berücksichtigt werden.

Durch die hohe Leistung des Kontrollsignals in einem schmalbandigen Spektralbereich und bei einer der Auskopplung folgenden linearen und möglichst amplituden-unbegrenzten Verstärkung, ist das Kontrollsignal auch bei hohem Rauschen detektierbar. Das schmalbandige Filter eliminiert auch einen wesentlichen Teil des im Spektrum enthaltenden Rauschens.

Das erfindungsgemäße Verfahren und seiner Verwendungen werden mittels zur ihrer Durchführung entsprechender Anordnungen beschrieben.
Ein großer Vorteil ist die einfache Integrierbarkeit von neuen Komponenten in einem herkömmlichen Übertragungssystem zur Durchführung des Verfahrens. Hauptsächlich werden ein Kodierungsmodul zur Konzentration des festgelegten Anteils der Leistung des Kontrollsignals auf einen möglichst schmalbandigen Spektralbereich und ein Filter zur Isolierung einer dem Spektralbereich entsprechenden Spektrallinie für die Detektion des Kontrollsignals benötigt. Weitere notwendige Komponenten wie z. B. Überwachungskanal, Kanaleinkoppler- und auskoppler, opto-elektrischer Wandler mit einem amplitudengeregelten Verstärker zur vollständigen Durchführung des erfindungsgemäßen Verfahrens sind heutzutage in Übertragungssystemen schon eingesetzt. Der Aufwand zur Realisierung der Anordnungen zur Durchführung des erfindungsgemäßen Verfahrens sowie seiner Verwendungen ist dadurch in einer vorteilhaften Weise stark reduziert.

Das Kontrollsignal kann an einer sowie mehreren Stellen bzw. Abschnitten des Übertragungssystems ausgekoppelt und detektiert werden, z. B. an herkömmlichen Schnittstellen zwischen Übertragungsstrecke und Netzwerkmanagement. Hier noch werden nur ein einziges Kodierungsmodul sendeseitig im Übertragungssystem mit entsprechenden Filtern zur Isolierung des schmalbandigen Anteils des Kontrollsignals an den Schnittstellen benötigt. Weiterhin wird das ausgekoppelte Kontrollsignal bei jeder Schnittstelle regeneriert und mit einer ausreichender Leistung in einen weiteren Abschnitt des Übertragungssystems eingekoppelt. Ein Dekodierungsmodul ist in der Schnittstelle angeordnet, z. B. einem Regenerator nachgeschaltet, damit eine Übermittlung von Informationen an das Netzwerkmanagement mit der dekodierten Datenform des Kontrollsignals ermöglicht ist. Für eine Weiterübertragung des Kontrollsignals mit konzentriertem Spektralbereich ist in diesem Fall ein weiteres Kodierungsmodul notwendig. Das Kodierungsmodul ist jedoch nicht nötig, wenn eine Datenschnittstelle zum Netzwerkmanagement mit der Möglichkeit zum Einfügen neuer Daten nicht vorgesehen ist.

Das Filter zur Isolierung des schmalbandigen Anteils des Kontrollsignals erzeugt eine schmale Bandpassfilterung. Dadurch ist auch eine Unterdrückung des weißen Rauschens z. B. durch verstärkte spontane Emission erreicht. Als schmalbandiger Spektralbereich für die Konzentration eines festgelegten Anteils des Kontrollsignals wird z.B. die Taktfrequenz gewählt. Dafür kann beispielsweise eine CMI- (Coded Mark Inversion) oder eine RZ-Kodierung (Return to Zero) des Kontrollsignals verwendet werden. Bei einer Gleichverteilung der Einsen und Nullen wird die Hälfte der gesamten Leistung des Kontrollsignals in einer Spektrallinie bei der Taktfrequenz konzentriert. Zur Vermeidung von Dauer-Einsen oder Dauer-Nullen im ursprünglichen Kontrollsignal ist eine zusätzliche Verscramblung der Daten im Kodierungsmodul vorgesehen, damit der schmalbandige Spektralbereich mit der halben Signalleistung sichergestellt wird.

Vorteilhafte Weiterbildungen der Erfindung sind in den Unteransprüchen angegeben.

Ein Ausführungsbeispiel der Erfindung wird im folgenden anhand der Zeichnung näher erläutert.

Dabei zeigen:
- Fig. 1:: eine Anordnung zur Ermittlung einer Leitungsunterbrechung gemäß des erfindungsgemäßen Verfahrens
- Fig. 2:: eine Anordnung zur Messung der Übertragungsdämpfung gemäß des erfindungsgemäßen Verfahrens

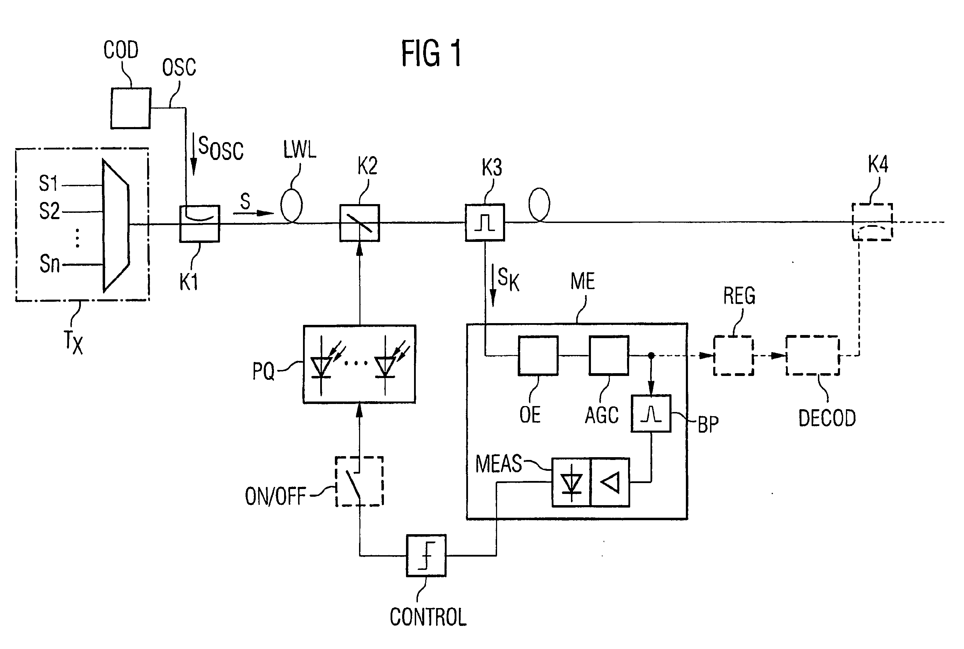

In Fig. 1 ist eine Anordnung zur Ermittlung einer Leitungsunterbrechung gemäß des erfindungsgemäßen Verfahrens zur Detektion eines Kontrollsignals dargestellt.
Aus einer Sendeeinheit Tₓ sind optische Signale S1, S2, ..., Sn in einen Lichtwellenleiter LWL eines Übertragungssystems eingespeist, die z. B. als Wellenlängen- oder Polarisationsmultiplex-Signale vorgesehen sind. Im einem ersten Abschnitt des Lichtwellenleiters LWL ist ein erster Einkoppler K1 angeordnet. Dem Einkoppler K1 ist ein Kodierungsmodul COD vorgeschaltet, das aus einem Überwachungskanal OSC des Übertragungssystems ein Kontrollsignal S_{OSC} so kodiert, dass ein festgelegter Anteil seiner Leistung in einen schmalbandigen Spektralbereich konzentriert wird. Dafür weist das Kodierungsmodul einen Verscrambler mit anschließender CMI- oder RZ-Kodierung auf. Als Zentrum des Spektralbereiches wird hier die Taktfrequenz des Kontrollsignals gewählt.
In einem weiteren Abschnitt sind ein zweiter Einkoppler K2 zur Einspeisung von mindestens einem Pumpsignal aus einer Pumpquelle PQ und ein dritter nachgeordneter Auskoppler K3 zum Abzweigen des Kontrollsignals S_{OSC} aus dem Lichtwellenleiter LWL angeordnet. Es ist ebenfalls möglich, mehrere nachgeschaltete Einkoppler K2 zum Einspeisen von Pumpsignalen aus mehreren Pumpquellen anzuordnen. Einer Messeinrichtung ME ist das ausgekoppelte Kontrollsignal S_{OSC} zugeführt. Die Messeinrichtung ME weist einen opto-elektrischen Wandler OE mit nachgeschaltetem Verstärker AGC (automatic gain control) auf, die in einer Schnittstelle mit Auskopplung eines Kontrollsignals des Überwachungskanals zu dem Netzwerkmanagement üblicherweise verwendet sind. Die hier verwendeten Elementen OE und AGC weisen hier die Bandbreite des Kontrollsignals auf, sodass das Element AGC auch einen Regenerator REG mit nachgeordnetem Dekodierungsmodul DECOD mit Descrambler speisen kann. Im hier gewählten Ausführungsbeispiel kann daher das Kontrollsignal S_{OSC} zur Auswertung dem Netzwerkmanagement zugeführt werden und neue Daten aus dem Netzwerkmanagement können über , ein weiteren Kodierungsmodul COD mit weiterem Verscrambler und eine elektrisch-optische Schnittstelle dem Einkoppler K4 in weiterführender Richtung zugeführt werden. Die opto-elektrische Wandlung und Verstärkung des ausgekoppelten Kontrollsignals S_{OSC} erfolgt linear und nicht amplituden-begrenzt, damit der schmalbandigen Spektralbereich des ausgekoppelten Kontrollsignals S_{OSC} durch Amplitudenbegrenzung im Rauschen nicht unterdrückt wird. Dem Verstärker AGC ist außerdem ein schmalbandiges Bandpassfilter BP nachgeschaltet, dessen relative Bandbreite etwa 5bis 10.10⁻⁵ der gesamten Bandbreite von, z.B. 2-3 MHz, des Kontrollsignals S_{OSC} beträgt. Bei Abwesenheit des Spektrallinie aus dem ausgekoppelten gefilterten Kontrollsignals S_{OSC} am Ausgang des Filters BP ist eine Leitungsunterbrechung unvermeidlich detektiert. Ein mit einer vorgegebenen Schwelle eingegebener Schwellwertdetektor CONTROL mit vorgeschalteten Verstärker und Gleichrichter als Messmodul MEAS zur Ermittlung eines Leistungspegels P steuert die Ein- und Ausschaltung der Pumpquelle PQ mittels eines Schalters ON/OFF. Bei Inbetriebnahme des Übertragungssystems sind alle Pumpquellen ausgeschaltet und werden nur bei einer Anwesenheit der Spektrallinie am Messmodul MEAS eingeschaltet.

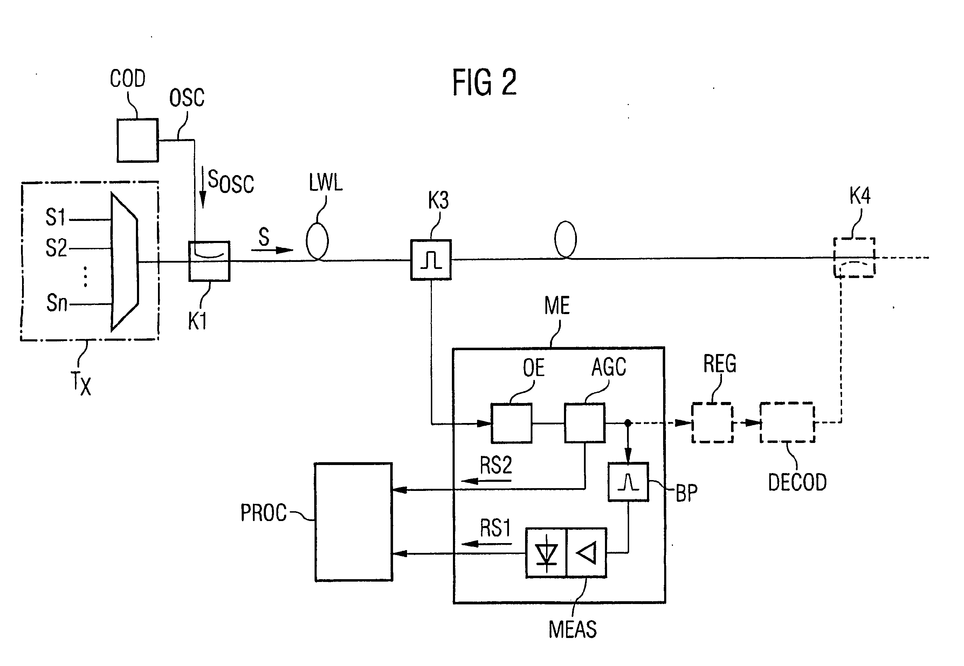

Fig. 2 zeigt eine Anordnung zur Messung der Übertragungsdämpfung gemäß des erfindungsgemäßen Verfahrens zur Detektion eines Kontrollsignals.
Zur Detektion eines Kontrollsignals weist die Fig. 2 die Merkmale gemäß Fig. 1 bis auf die Komponenten K2, PQ, ON/OFF, CONTROL aus Klarheitsgründen auf.
An einer Auswerteeinheit PROC zur Messung der Übertragungsdämpfung anhand des ermittelten Werts des Leistungspegels P und des eingestellten Gewinns am Verstärkungsregler AGC Signale RS1, RS2 von dem Messmodul MEAS und von dem Verstärkungsregler AGC abgegeben sind. Der Leistungswert P ist hier im Gegensatz zur Fig. 1 in einer analoger Weise ermittelt. Zur Berechnung der Übertragungsdämpfung bildet die Auswerteeinheit das Verhältnis zwischen der ermittelten Leistung am Ausgang des Auskopplers K3 und der Leistung des mit dem sendeseitigen Einkoppler K1 eingespeisten Kontrollsignals S_{OSC}.

## Patentansprüche

1. Verfahren zur Detektion eines Kontrollsignals (S_{OSC}) in einem optischen Übertragungssystem für optische Signale (S1, S2, ...), bei dem folgende Verfahrensschritte erfolgen:
- dass ein konstanter Anteil der Leistung in einem festgelegten Frequenzbereich des Kontrollsignals (S_{OSC}) in einem schmalbandigen Spektralbereich konzentriert wird,
- dass das Kontrollsignal (S_{OSC}) sendeseitig in das Übertragungssystem eingespeist wird,
- dass nach einem Abschnitt des Übertragungssystems das Kontrollsignal (S_{OSC}) ausgekoppelt wird,
- dass das ausgekoppelte Kontrollsignal (S_{OSC}) optoelektrisch gewandelt, verstärkt und zur Isolierung des möglichst schmalbandigen Spektralbereiches des Kontrollsignals (S_{OSC}) gefiltert wird,
- dass die Leistung des isolierten schmalbandigen Spektralbereiches zur Detektion des Kontrollsignals (S_{OSC}) ermittelt wird; **dadurch gekennzeichnet,**
- **dass** die Verstärkung des vom Übertragungssystem ausgekoppelten Kontrollsignals (S_{OSC}) linear und möglichst amplituden-unbegrenzt erfolgt, so dass bei hohem Rauschanteil das Kontrollsignal (S_{OSC}) im schmalbandigen Spektralbereich noch detektiert wird.

2. Verfahren nach Anspruch 1,
**dadurch gekennzeichnet,**
**dass** die Konzentration eines konstanten Anteils der Leistung des Kontrollsignals (S_{OSC}) auf einen schmalbandigen Spektralbereich durch eine Gleichverteilung von Einsen und Nullen der Daten des Kontrollsignals (S_{OSC}) mit einer nachfolgenden geeigneten Kodierung erzeugt ist.

3. Verfahren nach Anspruch 2,
**dadurch gekennzeichnet,**
**dass** zur Gleichverteilung von Einsen und Nullen der Daten des Kontrollsignals (S_{OSC}) eine Verscramblung und anschließend zur Erzeugung einer Spektrallinie eine CMI- bzw.- RZ-Kodierung verwendet werden.

4. Verfahren nach einem der Ansprüche 1 bis 3,
**dadurch gekennzeichnet,**
**dass** die opto-elektrische Wandlung und die Verstärkung des ausgekoppelten Signals wenigstens für die Daten-Bandbreite (B_{OSC}) des Kontrollsignals vorgesehen sind.

5. Verfahren nach Anspruch 4,
**dadurch gekennzeichnet,**
**dass** nach der opto-elektrischen Wandlung und der Verstärkung des ausgekoppelten Signals eine zusätzliche Regenerierung des Kontrollsignals vorgesehen ist.

6. Verfahren gemäß einem der Ansprüche 1 bis 5 zur Ermittlung einer Leitungsunterbrechung im Übertragungssystem,
**dadurch gekennzeichnet,**
**dass** ein Leistungspegel (P) des isolierten schmalbandigen Spektralbereiches des Kontrollsignals (S_{OSC}) ermittelt wird, **dass** bei einem unterhalb einer vorgegebenen Schwelle liegenden Leistungspegels (P) eine Leitungsunterbrechung im Übertragungssystem detektiert wird,
**dass** eine zur erforderlichen Verstärkung der optischen Signale (S1, S2, ...) im Abschnitt des Übertragungssystems angeordnete Pumpquelle (PQ) im Betrieb ausgeschaltet wird bzw. außer Betrieb ausgeschaltet bleibt und
**dass** bei keiner ermittelten Leitungsunterbrechung die Pumpquelle (PQ) eingeschaltet wird.

7. Verfahren gemäß einem der Ansprüche 1 bis 6,
**dadurch gekennzeichnet,**
**dass** für zur Übertragungsrichtung kontra- bzw. ko- bzw. bidirektionale Pumpen der oder mehrerer Pumpquelle (PQ) Kontrollsignale aus einem kontra- bzw. ko- bzw. bidirektionalen Überwachungskanal des Übertragungssystems verwendet werden.

8. Verfahren gemäß einem der Ansprüche 1 bis 5 zur Messung der Übertragungsdämpfung,
**dadurch gekennzeichnet,**
**dass** eine Ermittlung des Leistungspegels (P) des isolierten schmalbandigen Spektralbereiches des Kontrollsignals (S_{OSC}) durchgeführt wird,
**dass** eine Ermittlung eines Werts (G) einer der- optoelektrischen Wandlung anschließenden Verstärkung durchgeführt wird und
**dass** durch Abgabe des Leistungspegels (P) und des Werts (G) der Verstärkung an einer zusätzlichen Auswerteeinheit die Messung der Übertragungsdämmpfung erfolgt.

9. Anordnung zur Durchführung der vorgenannten Verfahren gemäß einem der Ansprüche 1 bis 5 bzw. 6 bis 8 mit einem Lichtwellenleiter (LWL) zur Übertragung optischer Signale (S1, S2, ...), derart ausgestaltet,
dass in einem ersten Abschnitt des Lichtwellenleiters (LWL) ein erster Koppler (K1) zur Einkopplung eines Kontrollsignals (S_{OSC}) angeordnet ist, dem ein Kodierungsmodul (COD) zur Konzentration eines konstanten Anteils der Leistung des Kontrollsignals (S_{OSC}) auf einem möglichst schmalbandigen Spektralbereich vorgeschaltet ist,
dass in einem weiteren Abschnitt des Lichtwellenleiters (LWL) ein Auskoppler (K3) zum Abzweigen des Kontrollsignals (S_{OSC}) aus dem Lichtwellenleiter (LWL) angeordnet ist, **dadurch gekennzeichnet,**
**dass** das ausgekoppelte Kontrollsignal (S_{OSC}) über einen opto-elektrischen Wandler (OE) und weiterhin einen Verstärkungsregler (AGC) einem schmalbandigen Bandpassfilter (BP) zur Isolierung des schmalbandigen Spektralbereiches des ausgekoppelten Kontrollsignals (S_{OSC}) zugeführt ist und
**dass** dem Bandpassfilter (BP) ein Messmodul (MEAS) nachgeschaltet ist.

10. Anordnung gemäß Anspruch 9,
**dadurch gekennzeichnet,**
**dass** dem Auskoppler (K3) mindestens ein zweiter Koppler (K2) zur Einspeisung von mindestens einem Pumpsignal aus einer Pumpquelle (PQ) vorgeschaltet ist,
**dass** das Messmodul (MEAS) einen Verstärker und einen Gleichrichter zur Ermittlung eines Leistungspegels (P) nach wenigstens zwei Pegelwerten des isolierten schmalbandigen Spektralbereiches aufweist und
**dass** anschließend dem Gleichrichter ein Schwellwertdetektor (CONTROL) verbunden ist, dessen Ausgangssignal einem Schalter (ON/OFF) zur Ein- oder Ausschaltung des Pumpsignals der Pumpquelle (PQ) zugeführt ist.

11. Anordnung gemäß Anspruch 9,
**dadurch gekennzeichnet,**
**dass** das Messmodul (MEAS) einen Verstärker und einen Gleichrichter zur Ermittlung des Leistungspegels (P) des isolierten schmalbandigen Spektralbereiches aufweist und
**dass** an einer Auswerteeinheit (PROC) zur Messung der Übertragungsdämpfung anhand des ermittelten Werts des Leistungspegels (P) und des eingestellten Verstärkungswertes (G) am Verstärkungsregler (AGC) Signale (RS1, RS2) von dem Messmodul (MEAS) und von dem Verstärkungsregler (AGC) abgegeben sind.

12. Anordnung nach einem der Ansprüche 9 bis 11,
**dadurch gekennzeichnet,**
**dass** an einem Ausgang des Verstärkungsreglers (AGC) zu einer Regenerierung des ausgekoppelten Signals (S_{OSC}) ein Regenerator (REG) mit mit nachgeschaltetem und Dekodierungsmodul (DECOD) mit Descrambler angeschlossen ist.

13. Anordnung nach Anspruch 12,
**dadurch gekennzeichnet,**
**dass** ein Koppler (K4) zum Einspeisen des regenerierten ausgekoppelten Signals (S_{OSC}) in einen weiteren Abschnitt des Lichtwellenleiters (LWL) angeordnet ist.

14. Anordnung nach einem der Ansprüche 9 bis 13,
**dadurch gekennzeichnet,**
**dass** die Komponenten (BP, MEAS) in einer oder mehreren Auskopplungsleitungen (K3, OE, AGC, REG, K4) eines für Netzwerkmanagement verwendeten Überwachungskanals (OSC) mit Kontrollsignal (S_{OSC}) integrierbar ist, wobei einerseits dem sendeseitig im Übertragungssystem angeordneten Einkoppler (K1) das Kodierungsmodul (COD) und anderseits dem Dekodierungsmodul (DECOD) der Regenerator (REG) vorgeschaltet sind.

15. Anordnung nach einem der Ansprüche 9 bis 14,
**dadurch gekennzeichnet,**
**dass** der schmalbandige Spektralbereich 50% der gesamten Leistung des vom Kodierungsmodul (COD) ausgehenden Kontrollsignals (S_{OSC}) aufweist.

16. Anordnung nach einem der Ansprüche 9 bis 15,
**dadurch gekennzeichnet,**
**dass** der Leistungspegel (P) bei einer im Lichtwellenleiter (LWL) angeordneten ein- oder ausgeschalteter Pumpquelle (PQ) detektierbar bzw. ermittelbar ist.

## Claims

1. Method for detecting a control signal (S_{OSC}) in an optical transmission system for optical signals (S1, S2, ...), wherein the following method steps are performed:
- a constant component of the power in a specified frequency range of the control signal (S_{OSC}) is concentrated in a narrowband spectral range,
- the control signal (S_{OSC}) is fed into the transmission system on the transmitter side,
- after a section of the transmission system, the control signal (S_{OSC}) is coupled out,
- the outcoupled control signal (S_{OSC}) is opto-electrically modulated, amplified and filtered in order to isolate the preferably narrowband spectral range of the control signal (S_{OSC}),
- the power of the isolated narrowband spectral range is determined for detection of the control signal (S_{OSC}),
**characterised in that**
- the amplification of the control signal (S_{OSC}) coupled out from the transmission system is linear and preferably unlimited in amplitude, so that the control signal (S_{OSC}) is still detected in the narrowband spectral range even given a high noise component.

2. Method according to claim 1,
**characterised in that**
the concentration of a constant component of the power of the control signal (S_{OSC}) is created on a narrowband spectral range by means of an even distribution of ones and zeros of the data of the control signal (S_{OSC}) with subsequent appropriate encoding.

3. Method according to claim 2,
**characterised in that**
scrambling is used to achieve an even distribution of ones and zeros of the data of the control signal (S_{OSC}) and then a CMI or RZ coding is used to create a spectral line.

4. Method according to one of the claims 1 to 3,
**characterised in that**
the opto-electrical modulation and the amplification of the outcoupled signal are provided at least for the data bandwidth (B_{OSC}) of the control signal.

5. Method according to claim 4,
**characterised in that**
an additional regeneration of the control signal is provided after the opto-electrical modulation and amplification of the outcoupled signal.

6. Method according to one of the claims 1 to 5 for determining a line breakage in a transmission system,
**characterised in that**
a power level (P) of the isolated narrowband spectral range of the control signal (S_{OSC}) is determined,
a line breakage is detected in the transmission system if a power level (P) is below a predetermined threshold,
a pump source (PQ) disposed in the transmission system section in order to provide the necessary amplification of the optical signals (S1, S2, ...) is switched off during system operation or remains switched off when the system is not in operation, and
the pump source (PQ) is switched on if no line breakage is detected.

7. Method according to one of the claims 1 to 6,
**characterised in that**
control signals from a counter-directional or co-directional or bidirectional monitoring channel of the transmission system are used for pumps of the one or more pump sources (PQ) that are counter-directional or co-directional or bidirectional with respect to the transmission direction.

8. Method according to one of the claims 1 to 5 for measuring the transmission loss,
**characterised in that**
the power level (P) of the isolated narrowband spectral range of the control signal (S_{OSC}) is determined,
a value (G) of an amplification following the opto-electrical modulation is determined and
the transmission loss is measured as a result of the output of the power level (P) and the value (G) of the amplification at an additional evaluation unit.

9. Arrangement for implementing the above-mentioned methods according to one of the claims 1 to 5 or 6 to 8, comprising an optical wave guide (LWL) for transmitting optical signals (S1, S2, ...), embodied in such a way that
in a first section of the optical wave guide (LWL), a first coupler (K1) is disposed for coupling in a control signal (S_{OSC}), on the line side of which coupler an encoding module (COD) is connected in series for concentrating a constant component of the power of the control signal (S_{OSC}) on a preferably narrowband spectral range,
an outcoupler (K3) is disposed in a further section of the optical wave guide (LWL) in order to tap off the control signal (S_{OSC}) from the optical wave guide (LWL),
**characterised in that**
the outcoupled control signal (S_{OSC}) is supplied via an opto-electrical transducer (OE) and in addition via an automatic gain control amplifier (AGC) to a narrowband band-pass filter (BP) for isolating the narrowband spectral range of the outcoupled control signal (S_{OSC}), and
a measuring module (MEAS) is connected in series downstream of the band-pass filter (BP).

10. Arrangement according to claim 9,
**characterised in that**
at least a second coupler (K2) for feeding in at least one pump signal from a pump source (PQ) is connected in series on the line side of the outcoupler (K3),
the measuring module (MEAS) has an amplifier and a rectifier for determining a power level (P) after at least two level values of the isolated narrowband spectral range, and
subsequently connected to the rectifier is a threshold detector (CONTROL) whose output signal is supplied to a switch (ON/OFF) for activating or deactivating the pump signal of the pump source (PQ).

11. Arrangement according to claim 9,
**characterised in that**
the measuring module (MEAS) has an amplifier and a rectifier for determining the power level (P) of the isolated narrowband spectral range and
signals (RS1, RS2) are output by the measuring module (MEAS) and by the automatic gain control amplifier (AGC) at an evaluation unit (PROC) for measuring the transmission loss on the basis of the determined value of the power level (P) and the set amplification value (G) at the automatic gain control amplifier (AGC).

12. Arrangement according to one of the claims 9 to 11,
**characterised in that**
a regenerator (REG) with downstream decoding module (DECOD) with descrambler is connected at an output of the automatic gain control amplifier (AGC) for the purpose of regenerating the outcoupled signal (S_{OSC}).

13. Arrangement according to claim 12,
**characterised in that**
a coupler (K4) is disposed in a further section of the optical wave guide (LWL) for feeding in the regenerated outcoupled signal (S_{OSC}).

14. Arrangement according to one of the claims 9 to 13,
**characterised in that**
the components (BP, MEAS) can be integrated in one or more outcoupling lines (K3, OE, AGC, REG, K4) of a monitoring channel (OSC) used for network management with control signal (S_{OSC}), with, on the one hand, the encoding module (COD) being connected in series on the line side of the coupler (K1) disposed on the transmitter side in the transmission system and, on the other hand, the regenerator (REG) being connected in series on the line side of the decoding module (DECOD).

15. Arrangement according to one of the claims 9 to 14,
**characterised in that**
the narrowband spectral range has 50% of the total power of the control signal (S_{OSC}) issuing from the encoding module (COD).

16. Arrangement according to one of the claims 9 to 15,
**characterised in that**
the power level (P) can be detected or determined at a pump source (PQ) disposed in the optical wave guide (LWL) whether said pump source is switched on or off.

## Revendications

1. Procédé pour la détection d'un signal de contrôle (S_{OSC}) dans un système de transmission optique pour des signaux optiques (S1, S2, ...) dans lequel interviennent les étapes de procédé suivantes :
- une partie constante de la puissance est concentrée dans une plage de fréquence définie du signal de contrôle (S_{OSC}) dans une plage spectrale à bande étroite,
- le signal de contrôle (S_{OSC}) est injecté côté émission dans le système de transmission,
- le signal de contrôle (S_{OSC}) est découplé après une partie du système de transmission,
- le signal de contrôle (S_{OSC}) découplé est converti de façon opto-électrique, amplifié et filtré pour l'isolation de la plage spectrale à bande la plus étroite possible du signal de contrôle (S_{OSC}),
- la puissance de la plage spectrale à bande étroite et isolée est déterminée pour la détection du signal de contrôle (S_{OSC}), **caractérisé en ce que**
- l'amplification du signal de contrôle (S_{OSC}) découplé du système de transmission s'effectue de façon linéaire et si possible de façon illimitée en amplitude, de sorte que, en présence d'une partie de bruit élevé, le signal de contrôle (S_{OSC}) est détecté encore dans la plage spectrale à bande étroite.

2. Procédé selon la revendication 1,
**caractérisé en ce**
**que** la concentration d'une partie constante de la puissance du signal de contrôle (S_{OSC}) est générée sur une plage spectrale à bande étroite par une répartition uniforme d'uns et de zéros des données du signal de contrôle (S_{OSC}) avec un codage approprié suivant.

3. Procédé selon la revendication 2,
**caractérisé en ce**
**qu'**un embrouillage est utilisé pour la répartition uniforme d'uns et de zéros des données du signal de contrôle (S_{OSC}) et ensuite un codage CMI ou RZ pour la production d'une ligne spectrale.

4. Procédé selon l'une quelconque des revendications 1 à 3,
**caractérisé en ce**
**que** la conversion opto-électrique et l'amplification du signal découplé sont prévues au moins pour la largeur de bande de données (B_{OSC}) du signal de contrôle.

5. Procédé selon la revendication 4,
**caractérisé en ce**
**qu'**une régénération supplémentaire du signal de contrôle est prévue après la conversion opto-électrique et l'amplification du signal découplé.

6. Procédé selon l'une quelconque des revendications 1 à 5 pour la détermination d'une interruption de ligne dans le système de transmission,
**caractérisé en ce**
**qu'**un niveau de puissance (P) de la plage spectrale à bande étroite et isolée du signal de contrôle (S_{OSC}) est déterminé,
**qu'**une interruption de ligne dans le système de transmission est détectée en présence d'un niveau de puissance (P) situé au-dessous d'un seuil prédéfini, en ce qu'une source de pompage (PQ) disposée dans la partie du système de transmission pour l'amplification nécessaire des signaux optiques (S1, S2, ...) est déconnectée pendant le service resp. reste déconnectée hors service et
**que** la source de pompage (PQ) est enclenchée lorsqu'on n'a pas détecté une interruption de ligne.

7. Procédé selon l'une quelconque des revendications 1 à 6,
**caractérisé en ce**
**que** des signaux de contrôle provenant d'un canal de contrôle contre-directionnelle resp. co-directionnelle resp. bidirectionnelle du système de transmission sont utilisés pour des pompes contre-directionnelles resp. co-directionnelles resp. bidirectionnelles par rapport au sens de transmission, de la source de pompage ou de plusieurs sources de pompage (PQ).

8. Procédé selon l'une quelconque des revendications 1 à 5 pour la mesure de l'amortissement de transmission,
**caractérisé en ce**
**qu'**une détermination du niveau de puissance (P) de la plage spectrale à bande étroite isolée du signal de contrôle (S_{OSC}) est effectuée,
**qu'**une détermination d'une valeur (G) d'une amplification consécutive à la conversion opto-électrique est effectuée et
**que** la mesure de l'amortissement de transmission s'effectue dans une unité d'analyse supplémentaire par l'émission du niveau de puissance (P) et de la valeur (G) de l'amplification.

9. Agencement pour la mise en oeuvre des procédés susmentionnés selon l'une quelconque des revendications 1 à 5 ou 6 à 8 avec un guide d'onde optique (LWL) pour la transmission de signaux optiques (S1, S2, ...),
de telle sorte
que dans une première partie du guide d'onde optique (LWL) est disposé un premier coupleur (K1) pour le couplage d'un signal de contrôle (S_{OSC}), en amont duquel est branché un module de codage (COD) pour la concentration d'une partie constante de la puissance du signal de contrôle (S_{OSC}) sur une plage spectrale à bande la plus étroite possible,
que dans une autre partie du guide d'onde optique (LWL) est disposé un découpleur (K3) pour la dérivation du signal de contrôle (S_{OSC}) du guide d'onde optique (LWL),
**caractérisé en ce que** le signal de contrôle (S_{OSC}) découplé est amené par un convertisseur (OE) opto-électrique et également un régulateur d'amplification (AGC) à un filtre de bande passante (BP) à bande étroite pour l'isolation de la plage spectrale à bande étroite du signal de contrôle (S_{OSC}) découplé et
qu'un module de mesure (MEAS) est branché en aval du filtre passe-bande (BP).

10. Agencement selon la revendication 9,
**caractérisé en ce**
**qu'**au moins un second coupleur (K2) pour l'injection d'au moins un signal de pompage provenant d'une source de pompage (PQ) est branché en amont du découpleur (K3),
**que** le module de mesure (MEAS) présente un amplificateur et un redresseur pour la détermination d'un niveau de puissance (P) après au moins deux valeurs de niveau de la plage spectrale à bande étroite et isolée et
**qu'**ensuite un détecteur de valeur seuil (CONTROL), dont le signal de sortie est amené à un interrupteur (ON/OFF) pour la connexion ou la déconnexion du signal de pompage de la source de pompage, est relié ensuite au redresseur.

11. Agencement selon la revendication 9,
**caractérisé en ce**
**que** le module de mesure (MEAS) présente un amplificateur et un redresseur pour la détermination du niveau de puissance (P) de la plage spectrale à bande étroite et isolée et
**que** des signaux (RS1, RS2) sont émis par le module de mesure (MEAS) et par le régulateur d'amplification (AGC) à une unité d'analyse (PROC) pour la mesure de l'amortissement de transmission à l'aide de la valeur déterminée du niveau de puissance (P) et de la valeur d'amplification (G) réglée sur le régulateur d'amplification (AGC).

12. Agencement selon l'une quelconque des revendications 9 à 11,
**caractérisé en ce**
**qu'**un régénérateur (REG) avec un module de décodage (DECOD) monté en aval avec désembrouilleur est raccordé à une sortie du régulateur d'amplification (AGC) pour une régénération du signal (S_{OSC}) découplé.

13. Agencement selon la revendication 12,
**caractérisé en ce**
**qu'**un coupleur (K4) est disposé dans une autre partie du guide d'onde optique (LWL) pour l'injection du signal (S_{OSC}) découplé régénéré.

14. Agencement selon l'une quelconque des revendications 9 à 13,
**caractérisé en ce**
**que** les composants (BP, MEAS) peuvent être intégrés dans une ou plusieurs lignes de découplage (K3, OE, AGC, REG, K4) d'un canal de contrôle (OSC) avec signal de contrôle (S_{OSC}) utilisé pour la gestion du réseau, le module de codage (COD) étant monté en amont du coupleur (K1) disposé côté émission dans le système de transmission d'une part et le générateur (REG) étant monté en amont du module de décodage (DECOD) d'autre part.

15. Agencement selon l'une quelconque des revendications 9 à 14,
**caractérisé en ce**
**que** la plage spectrale à bande étroite présente 50 % de la puissance globale du signal de contrôle (S_{OSC}) partant du module de codage (COD).

16. Agencement selon l'une quelconque des revendications 9 à 15,
**caractérisé en ce**
**que** le niveau de puissance (P) peut être détecté ou déterminé près d'une source de pompage (PQ) connectée ou déconnectée et disposée dans le guide d'onde optique (LWL).
